# EUROPÄISCHE PATENTSCHRIFT

(11) **EP 2 218 699 B1**
(45) Veröffentlichungstag und Bekanntmachung des Hinweises auf die Patenterteilung: **24.07.2013**
(21) Anmeldenummer: 08843126.7
(22) Anmeldetag: 21.10.2008
(51) Int. Cl.: C04B 24/08, C04B 24/24, C04B 103/60, C04B 40/00

(54) **UMFASSENDES ADDITIV FÜR EINE BAUSTOFFMISCHUNG**
COMPREHENSIVE ADDITIVE FOR A CONSTRUCTIONAL MIXTURE
ADDITIF COMBINÉ POUR MÉLANGE DE CONSTRUCTION

(30) Priorität: 22.10.2007 RU 2007138953
(43) Veröffentlichungstag der Anmeldung: 18.08.2010
(73) Patentinhaber: Chernyakov, Andrey Valerievich, Moscow 103009 (RU)
(72) Erfinder: Chernyakov, Andrey Valerievich, Moscow 103009 (RU)
(74) Vertreter: Andrae, Steffen
(86) Internationale Anmeldenummer: PCT/RU2008/000657
(87) Internationale Veröffentlichungsnummer: WO 2009/054753

(56) Entgegenhaltungen:
- CA-A1- 2 262 855
- CN-A- 1 131 651
- DE-A1- 19 905 488
- GB-A- 1 435 006
- RU-C1- 2 222 508
- RU-C1- 2 245 857
- RU-C1- 2 307 810

## Beschreibung

Die Erfindung betrifft das Gebiet der Baustoffe, insbesondere Zusammensetzungen von Zusatzmitteln für eine Betonmischung, und sie kann Anwendung finden zur Herstellung von Injektions- und Baumörteln und Betonmischungen, die beim Bau verschiedener Bauwerke verwendet werden.

Bei dem ständig zunehmenden Umfang der Bautätigkeit bleibt die Aufgabe höchst aktuell, sichere und langlebige Betondecken zu schaffen. Zur Erhöhung der Festigkeit von Baumischungen und zur Erniedrigung des Wasser-Zement-Verhältnisses in der Zusammensetzung setzt man verschiedene komplexe Zusatzmittel zu: Plastifikatoren, Hydrophobierungsmittel und andere.

So ist beispielsweise eine Betonmischung bekannt, in deren Zusammensetzung zur Erhöhung der Festigkeitseigenschaften und der Frostbeständigkeit ein Superplastifikator auf der Basis des Natriumsalzes des Kondensationsprodukts von Naphthalinsulfonsäure mit Formaldehyd und das Hydrophobierungsmittel Natriumethylsiliconat eingeführt werden (Urheberschein der UdSSR-Nr. 1807033, C04B 28/04, 1993).

Als Nachteile des Zusatzmittels, das einer Betonmischung zugesetzt wird, erweisen sich eine unzureichend hohe frühe Festigkeit des Zementsteins bei einem hohen Wasser-Zement-Verhältnis, sowie eine im Verhältnis zu einer Zusammensetzung ohne Zusatzmittel niedrige Endfestigkeit.

Es ist ein komplexes Zusatzmittel für Baumischungen auf der Basis von Polyethercarboxylaten bekannt, das von 5 bis 95 Gew.-% eines wasserlöslichen Polymers, das erhalten wird aus Polyoxyalkylen-haltigen Struktureinheiten, Monomeren einer Carbonsäure und/oder des Anhydrids einer Carbonsäure sowie anderen Monomeren, sowie von 5 bis 95% fein ausgemahlene Mineralstoffe, die eine spezifische Oberfläche von 0,5 bis 500 m²/g aufweisen, enthält. Diese pulverförmigen Polymerzusammensetzungen, die bis zu 90 Gew.-% eines Polyethercarboxylats enthalten, weisen wesentlich höhere Aushärtungszeiten und Abbindzeiten im Vergleich mit trockenen Aerosolprodukten auf, sowie höhere Festigkeitskennwerte bei ihrer Einführung in Baumischungen, die Zement enthalten(WO 00/47533, C04B20/10, 24/32, 24/26, 2000).

Als Nachteile des bekannten Zusatzmittels zu einer Baumischung erweisen sich die niedrige technologische Effektivität der Nutzung, weil es erstens besondere Lagerungsbedingungen erfordert, und weil zweitens nicht in allen Fällen die Möglichkeit besteht, die Zusatzmittel in trockener Form zuzusetzen. In Form einer wässrigen Lösung ist dieses Zusatzmittel beim Lagern instabil, unterliegt einer Hydrolysereaktion, was zum Verlust seiner Eigenschaften führt.

Als ihrem technischen Wesen nach dem Gegenstand der vorliegenden Anmeldung am nächsten kommend erweist sich ein komplexes Zusatzmittel für eine Baumischung, das den Superplastifikator S-3, technische Lignosulfonate und eine silicium-organische Komponente enthält, nämlich NatriumEthylsiliconat und/oder Natrium-Methylsiliconat mit einem Silicium-Massenanteil von 5,53 bis 6,11% und einem Polymerisationsgrad von 9 bis 12, das ein Pulver darstellt, und zwar bei dem folgenden Verhältnis der Komponenten in Masse-%: S-3 - 66,7-72,7, technische Lignosulfonate - 17,4-20,0, die genannte silicium-organische Komponente - 7,3-15,9 (Patent der russischen Förderation 2245857, C04B28/00, 2005).

Als Nachteile dieses Zusatzmittels erweisen sich die Kompliziertheit seiner Zubereitung, eine niedrige technologische Effektivität seiner Nutzung, besondere Lagerungsbedingungen sowie eine niedrige frühe Festigkeit des Zementsteins.

Aufgabe der vorliegenden Erfindung ist die Schaffung eines Zusatzmittels für eine Baumischung zur Schaffung von zuverlässigen und langlebigen Betondecken und Betonkonstruktionen.

Das technische Ergebnis der Nutzung des vorgeschlagenen Zusatzmittels für ein Baumischung liegt in der Erhöhung der Festigkeitseigenschaften, der Dichte und der Erniedrigung der Wasseraufnahme der Zementzusammensetzung bei einem unveränderten Zementgehalt.

Die gestellte Aufgabe wird dadurch gelöst, und das technische Ergebnis dadurch erreicht, dass ein komplexes Zusatzmittel für eine Baumischung dadurch gekennzeichnet ist, dass es eine silicium-organische Komponente - Natrium- oder Kalium-Ethylsiliconat und/oder Natrium- oder Kalium-Methylsiliconat, ein Polyethercarboxylat und Wasser in den folgenden Verhältnissen der Komponenten in Masse-% enthält:

| | |
|---|---|
| Natrium- oder Kalium-Ethylsiliconat und/oder | |
| Natrium- oder Kalium-Methylsiliconat | 1-50; |
| Polyethercarboxylat | 30-80; |
| Wasser | Rest, |

sowie dadurch, dass das Zusatzmittel für eine Baumischung zusätzlich technische Lignosulfonate, in Masse-%, von 0,1-15 enthalten kann;
sowie dadurch, dass dem komplexen Zusatzmittel zur Verleihung von thixotropen Eigenschaften zusätzlich Aerosil in einer Menge von 10 bis 15 Masse-% zugesetzt werden kann,
sowie dadurch, dass das Zusatzmittel beispielsweise für Unterwasserbetonierungen zusätzlich auch Cellulose in einer Menge von 1,0-15 Masse-% enthalten kann.

Das komplexe Zusatzmittel für eine Baumischung ist neu und stellt eine wässrige Lösung eines Polymergemischs dar, das die Produkte der Co-Kondensation von Polyethercarboxylaten und Natrium- oder Kalium-Ethylsiliconat und/oder Natrium- oder Kalium-Methylsilicat enthält und das ein verzweigtes oberflächenaktives Zusatzmittel darstellt, das bei der Bildung der Baumischung die Umhüllung des Zements mit dem Zusatzmittel verbessert, und das es entweder ermöglicht, den Zementgehalt in der Betonmischung zu vermindern, oder bei gleichem Zementgehalt seine Festigkeitseigenschaften, die Dichte zu erhöhen und die Wasseraufnahme zu vermindern.

Die Co-Kondensation des Polyethercarboxylats und des Natrium- oder Kalium-Ethylsiliconats und/oder des Natrium- oder Kalium-Methylsiliconats gestattet es, eine Mischung verzweigter Moleküle unterschiedlichen Baus zu erhalten. Ein derartiger Bau der Polymeren gestattet es, die Zusammensetzung zu stabilisieren, indem die mögliche Hydrolyse des Polyethercarboxylats in Wasser verhindert wird, sowie außerdem die Eigenschaften des Zementsteins ohne negative Folgen für die frühe Festigkeit und die Endfestigkeit zu verbessern.

Die Verwendung von Wasser in der Rezeptur gestattet es, das Zusatzmittel in flüssiger Form zu erhalten, was bei der Aufbewahrung und der Dosierung der Zusammensetzung bequem ist. Das erhaltene Zusatzmittel weist eine lange Lagerdauer auf (ein Jahr und mehr) und verliert bei der Lagerung seine Eigenschaften nicht.

Als Komponenten des vorgeschlagenen komplexen Zusatzmittels für ein Baumischung werden verwendet:
- Natrium- oder Kalium-Ethylsiliconat und/oder Natrium- oder Kalium-Methylsiliconat - GKZH-10 und GKZH-11, TU 6-02-696-76, Siakor TU 6-02-1-042-092;
- Polyethercarboxylat - Handelsmarken Mighty 21 ES (Kao Soar Co., Japan); Chupol HP 11 (Takemoto, Japan); BW 10 (BASF, Deutschland); Narlex LD 36 V (USA); FM 341 (Deutschland);
- Lignosulfonate (LST), technische, OST 13-183-83; 13-0281036-029-94;
- Aerosil - A 380 GOST 14922-77, K-7-30 TU 6-18-160-83;
- Cellulose - Handelsmarken UCS 01 (Sika®, Schweiz); UW Compound 11 (Schweiz).

Das Zusatzmittel stellt man durch Vermischen der genannten Komponenten her.

Die Erfindung wird anhand von Beispielen und Daten von Versuchsergebnissen erläutert.

### Beispiel 1.

In ein Gefäß mit einem Volumen von 1,5 l gibt man 200 g Wasser und 400 g Polyethercarboxylat der Marke FM 341, und nach einem 15-minütigem Vermischen setzt man 400 g Natrium-Methylsiliconat (Siakor) zu. Nach einem Vermischen für 30 Minuten ist die Zusammensetzung fertig und kann einer Baumischung zugesetzt werden. Das erhaltene Zusatzmittel verliert seine Eigenschaften bei der Lagerung nicht, wenn man es einen Monat lagert und danach zur Herstellung von Zementmustern verwendet. Man stellt die Zementmuster durch Vermischung von Zement, Wasser und der Lösung her. Das Verhältnis der Komponenten in den Zementmustern ist: 1 Gew.-Teil Zement, 0,7 Gew.-Teile Anmachwasser. Man setzt das Zusatzmittel mit dem Anmachwasser in einem Anteil von 0,6% (bezogen auf Trockensubstanz) der Masse des Zements zu.

### Beispiel 2.

Die Zubereitung des Zusatzmittels und der Zementmuster erfolgt analog Beispiel 1, abgesehen von dem Verhältnis der Komponenten und davon, dass man nach dem Vermischen der Zusammensetzung für 30 Minuten zusätzlich LST zusetzt und danach 15 Minuten vermischt.

### Beispiel 3.

Die Zubereitung des Zusatzmittels und der Zementmuster führt man analog Beispiel 2 durch, abgesehen von dem Verhältnis der Komponenten und davon, dass man nach einem Vermischen der Zusammensetzung für 15 Minuten zusätzlich Aerosil zusetzt, und danach die Zusammensetzung 30 Minuten mischt.

### Beispiel 4.

Die Zubereitung des Zusatzmittels und der Zementmuster führt man analog Beispiel 2 durch, abgesehen von dem Verhältnis der Komponenten und davon, dass man nach einem Vermischen der Zusammensetzung für 15 Minuten zusätzlich Cellulose in Form des Produkts UCS 01 zusetzt, und danach die Zusammensetzung 15 Minuten mischt

### Beispiel 5.

Die Zubereitung des Zusatzmittels und der Zementmuster führt man analog Beispiel 1 durch, abgesehen vom Verhältnis der Komponenten und davon, dass man nach dem Vermischen der Zusammensetzung für 30 Minuten zusätzlich Aerosil zusetzt, und danach die Zusammensetzung 30 Minuten mischt.

### Beispiel 6.

Die Zubereitung des Zusatzmittels und der Zementmuster führt man analog Beispiel 1 durch, abgesehen vom Verhältnis der Komponenten und davon, dass man nach dem Vermischen der Zusammensetzung für 30 Minuten zusätzlich Cellulose zusetzt, und die Zusammensetzung 15 Minuten mischt.

### Beispiel 7.

Die Zubereitung des Zusatzmittels und der Zementmuster führt man analog Beispiel 3 durch, abgesehen vom Verhältnis der Komponenten und davon, dass man nach dem Mischen der Zusammensetzung für 30 Minuten zusätzlich Cellulose in Form des Produkts UCS 01 zusetzt, und danach die Zusammensetzung 15 Minuten mischt.

Die Zusammensetzungen der Zusatzmittel und die Eigenschaften des erhaltenen Zementsteins sind in den Tabellen 1 bzw. 2 aufgeführt.

Der Komplex von Parametern, der die Eigenschaft des Zementsteins charakterisiert, und die erhaltenen Testergebnisse zeigen, dass die vorgeschlagenen komplexen Zusatzmittel bei ihrer Einführung in zementhaltige Materialien bei diesen hohe Anwendungskennwerte gewährleisten.

**Tabelle 1**

| **Nr. Bsp.** | **Zusammensetzung des Zusatzmittels, Masse-%** | | | | | |
|---|---|---|---|---|---|---|
| | **LST** | **Carboxylat** | **GKZH** | **UCS-01** | **Aerosil (A-380)** | **Wasser** |
| 1 | | 40 | 40 | | | 20 |
| 2 | 0,1 | 80 | 10 | | | 8,9 |
| 3 | 15 | 40 | 25 | | 10 | 10 |
| 4 | 3 | 65 | 1 | 15 | | 16 |
| 5 | | 30 | 8 | | 15 | 47 |
| 6 | | 30 | 50 | 1 | | 19 |
| 7 | 2 | 50 | 5 | 0 | 10 | 34,0 |

**Tabelle 2**

| Nr. Bsp. | Dichte des Zementsteins, kg/m³ | Druckfestigkeit MPa beim Altern, Tage | | | | Wasser aufnahme |
|---|---|---|---|---|---|---|
| | | 3 | 7 | 14 | 28 | % |
| Prototyp | 1767 | 5,41 | 12,02 | 14,46 | 17,56 | 1,12 |
| 1 | 1784 | 15,1 | 18,6 | 22,94 | 25,86 | 0,82 |
| 2 | 1839 | 15,29 | 19,07 | 25,66 | 30,02 | 0,22 |
| 3 | 1890 | 12,46 | 14,66 | 18,95 | 19,61 | 0,42 |
| 4 | 1843 | 8,9 | 17,4 | 19,0 | 25,64 | 0,91 |
| 5 | 1778 | 8,75 | 13,28 | 15,54 | 18,55 | 0,56 |
| 6 | 1837 | 9,69 | 15,12 | 19,99 | 21,52 | 0,63 |
| 7 | 1880 | 16,23 | 20,01 | 27,84 | 31,24 | 0,2 |

## Patentansprüche

1. Komplexes Zusatzmittel für eine Baumischung, **dadurch gekennzeichnet, dass** es Natrium- oder Kalium-Ethylsiliconat und/oder Natrium- oder Kalium-Methylsiliconat, ein Polyethercarboxylat und Wasser in folgenden Verhältnissen der Komponenten in Masse-% enthält:
| | |
|---|---|
| Natrium- oder Kalium-Ethylsiliconat und/oder Natrium- oder Kalium-Methysiliconat | 1-50; |
| Polyethercarboxylat | 30-80; |
| Wasser | Rest |

2. Komplexes Zusatzmittel für eine Baumischung nach Anspruch 1, **dadurch gekennzeichnet, dass** es technische Lignosulfonate in einer Menge von 0,1 bis 15 Masse-% enthält.

3. Komplexes Zusatzmittel für eine Baumischung nach Anspruch 1 oder Anspruch 2, **dadurch gekennzeichnet, dass** es hochdisperse pyrogene Kieselsäure in einer Menge von 10-15 Masse-% enthält.

4. Komplexes Zusatzmittel für eine Baumischung nach einem der Ansprüche 1 bis 3, **dadurch gekennzeichnet, dass** es Cellulose in einer Menge von 1,0-15 Masse-% enthält.

## Claims

1. Complex additive for a construction mixture, **characterized in that** it contains sodium or potassium ethyl siliconate and/or sodium or potassium methyl siliconate, a polyether carboxylate and water in the following component ratio, in mass %:
| | |
|---|---|
| sodium or potassium ethyl siliconate and/or sodium or potassium methyl siliconate | 1 - 50; |
| polyether carboxylate | 30 - 80; |
| water | balance. |

2. Complex additive for a construction mixture according to claim 1, **characterized in that** it contains technical lignosulfonates in an amount of 0.1 to 15 mass %.

3. Complex additive for a construction mixture according to claim 1 or claim 2, **characterized in that** it contains highly dispersed pyrogenic silica in an amount of 10 to 15 mass %.

4. Complex additive for a construction mixture according to any of claims 1 to 3, **characterized in that** in contains cellulose in an amount of 1.0 to 15 mass %.

## Revendications

1. Additif complexe pour un mélange destiné à la construction, **caractérisé en ce qu'**il contient de l'éthyle siliconate de sodium ou de potassium et/ou du méthyle siliconate de sodium ou de potassium, un polyéther carboxylate et de l'eau dans les rapports suivants des composants, exprimés en pourcentage en masse :
| | |
|---|---|
| éthyle siliconate de sodium ou de potassium et/ou méthyle siliconate de sodium ou de potassium | 1-50, |
| polyéther carboxylate | 30-80 ; |
| eau | reste. |

2. Additif complexe pour un mélange destiné à la construction selon la revendication 1, **caractérisé en ce qu'**il contient des sulfonates ligneux techniques dans une quantité de 0,1 à 15 % en masse.

3. Additif complexe pour un mélange destiné à la construction selon la revendication 1 ou la revendication 2, **caractérisé en ce qu'**il contient de la silice pyrogène fortement dispersée dans une quantité de 10 à 15 % en masse.

4. Additif complexe pour un mélange destiné à la construction selon l'une des revendications 1 à 3, **caractérisé en ce qu'**il contient de la cellulose dans une quantité de 1,0 à 15 % en masse.
